# EUROPEAN PATENT APPLICATION

(11) **EP 2 887 640 A1**
(43) Date of publication of application: **24.06.2015**
(21) Application number: 13306834.6
(22) Date of filing: 23.12.2013
(51) Int. Cl.: H04N 5/232

(54) **Guidance method for taking a picture, apparatus and related computer program product**

(71) Applicant: Thomson Licensing, 92130 Issy-les-Moulineaux (FR)
(72) Inventor: Baillard, Caroline, 35576 Cesson-Sévigné (FR); Le Clerc, François, 35576 Cesson-Sévigné (FR); Bourdon, Pascal, 35576 Cesson-Sévigné (FR)
(74) Representative: Huchet, Anne

(57) **Abstract**

The invention relates to a guidance method for taking a picture, implemented by an apparatus comprising a display device (DD). According to the invention, the method comprises at least one iteration of :
- obtaining (10) an image representative of a subject to be photographed, called a guidance image (GUI), via an acquisition device (DA);
- comparing (20) of a set (ECGu) of at least one feature of said guidance image, called a guidance feature (CGu), with a corresponding set (ECSO) of at least one desired characteristic (CSO), delivering a comparison result (RESC);

and when said desired characteristic (CSO) differs from said guidance feature (CGu), displaying (30) on said display device (DD) of at least one item of correction information (Icorr) of said guidance image in view of said comparison result (RESC).

## Description

### 1. Domain of the Invention

The invention relates to the production of picture according to specific rules. More specifically, the proposed technique aims at guiding a user during the process of photography taking.

### 2. Prior Art Solutions

Millions of pictures are taken every day. Most of them are taken on the fly, without needing any specific assistance. Some, however, need to follow specific requirements. This is for example the case of pictures compliant with identity related applications (like ID cards or passport). This may also be the case of pictures which are taken in a specific artistic purpose (like pictures which should resemble to famous know shot).

However, most users are not professional photographers. Thus, when a user wants to take a picture which resembles to a famous picture of a well-known photographer or when a user wants to take a picture which follows a given number of characteristics (for example pictures compliant with identity related applications), the task may be hard. Indeed, the user may not be aware of all the rules or characteristics which have to be respected. Thus it may result a bad user experience when attempting to take the picture. The result may also be deceptive (when attempting to take an artistic picture) or not conform to specifics rules or characteristics.

The identity photograph is a typical situation where many rules and characteristics have to be followed. The ISO/IEC standard 1794-5 provides a set of detailed requirements for "frontal" and "full frontal" face image including:
A. frontal head pose (+/- 5 degrees in every direction);
B. neutral expression:
   o mouth closed and non-smiling,
   o eyes opened normally (not wide open, no squinting) and facing the camera,
   o relaxed eyebrows (no frowning or raised eyebrows);
C. uniform background; only one face is visible; no other person's face, hands, or arms;
D. face region clearly visible and free of shadows, no object occluding the face, no veil or headdress obscuring a facial feature or generating shadows
E. eye pupils and irises clearly visible (glasses shall be clear glass and transparent, glasses frames or hair shall not obscure the eyes)
F. square shoulders (torso and face facing the camera);

For full frontal face image type, there are additional requirements and recommendations regarding the position and the relative dimensions of the full image with respect to the face:
G. the head should be horizontally centred in the image;
H. the distance between the bottom edge of the image and the horizontal eye line should be between 50% and 70% of the total vertical length;
I. there should be at 240 pixels for the width of the head, and roughly 120 pixels between the two eyes;
J. the (image width : head width) ratio should be between 7:5 and 2:1;
K. the length of the head should be between 70% and 80% of the vertical length of the image.

The identity pictures are often taken using photo booth. Some photo booths in prior art are certified for passport application and the appropriate lighting and photo format can be guaranteed. However, the content of photo depends entirely on the user. No guidance is offered during the photo taking procedure. The only support provided by the existing photo booths is a list of rules printed on the outside wall of the booth. This, however, is not great help for the user. As a result, the user may have to try several times before getting a satisfying photo. This discouraging experience may create a bad impression of photo booth for the public. This photo booth is usually not able to inform the user on the situation of the picture regarding the ID rules. Of course advices are pre-printed on the entrance of the photo booth for indicating features which have to be followed. So there is a need for providing a method and apparatus which help user taking a picture which follows a given number of characteristics in a simple and interactive way.

### 3. Presentation of the invention

The invention overcomes the drawbacks of the prior art.

More specifically, the invention relates to a method for guiding shooting of a picture a, as claimed in claim 1, and a device as claimed in claim 9.

According to another aspect, the proposed technique pertains to a computer program product, as claimed in claim 10, downloadable from a communications network and/or stored on a computer-readable support and/or executable by a microprocessor. According to the invention, such a program comprises program code instructions to execute the method for guiding shooting of a picture as described here above.

According to another aspect, the invention concerns a mobile device comprising a display or connected to an external display and a processor adapted to execute computer program instructions for the execution of the method for guiding shooting according to the invention.

According to another aspect, the invention concerns a mobile device comprising a display or associated with a display, a camera for capturing a picture, a network interface for communicating with an online service providing an online guidance method. According to this aspect,
- the camera captures an image representative of a subject to be photographed, called a guidance image (GUI);
- the captured image, called guidance image, is displayed on the display device;
- the online guidance method compares (20) a set (ECGu) of at least one feature of the guidance image, called a guidance feature (CGu), with a corresponding set (ECSO) of at least one desired characteristic (CSO), delivering a comparison result (RESC);
   and when the desired characteristic (CSO) differs from the guidance feature (CGu) displays (30) on the display device (DD) of at least one item of correction information (Icorr) of the guidance image in view of the comparison result (RESC),
   the camera captures iteratively a new image of the subject until the comparison matches.

### 4. Drawings

The proposed method is described in the following by way of examples in connection with the accompanying figures without limiting the scope of the protection as defined by the claim. In the figures:
- figure 1 illustrates the main features of the proposed technique;
- figure 2 illustrates an embodiment of the proposed technique;
- figure 3 illustrate a face with a bounding box;
- figure 4 illustrates an embodiment of a pre-analysis device according to the proposed technique,
- figures 5a and 5b illustrate an embodiment of devices according to preferred embodiments of the invention

### 5. Detailed Description of the Invention

### 5.1 Principles of the invention

As already said, the invention aims at allowing a user to take pictures of a given subject according to specific rules or characteristics.

According to the proposed technique, the aforementioned problem is solved by interactively guiding the user during the shot of the picture. The invention is based on classification and grouping of several characteristics in a set of characteristics that are representative of a standard or of a guide. This set of characteristics, which is called a set of "wanted characteristics", is loaded in the terminal. In a real time process (i.e. in a process which does not need to wait a long time before obtaining instructions), a guidance image is obtained by the terminal (which comprises an acquisition apparatus), and guidance characteristics are obtained from the guidance image. The guidance characteristics are compared with the wanted characteristics. When the wanted characteristics and the guidance characteristics match, then a final picture is obtained. As long as some guidance characteristics do not match with corresponding wanted characteristics, a message is displayed on the screen for telling the user that a problem remains on the picture (the message also proposes a solution to the problem). The user may then correct the positioning of the subject (or of himself when he tries to take a picture of himself).

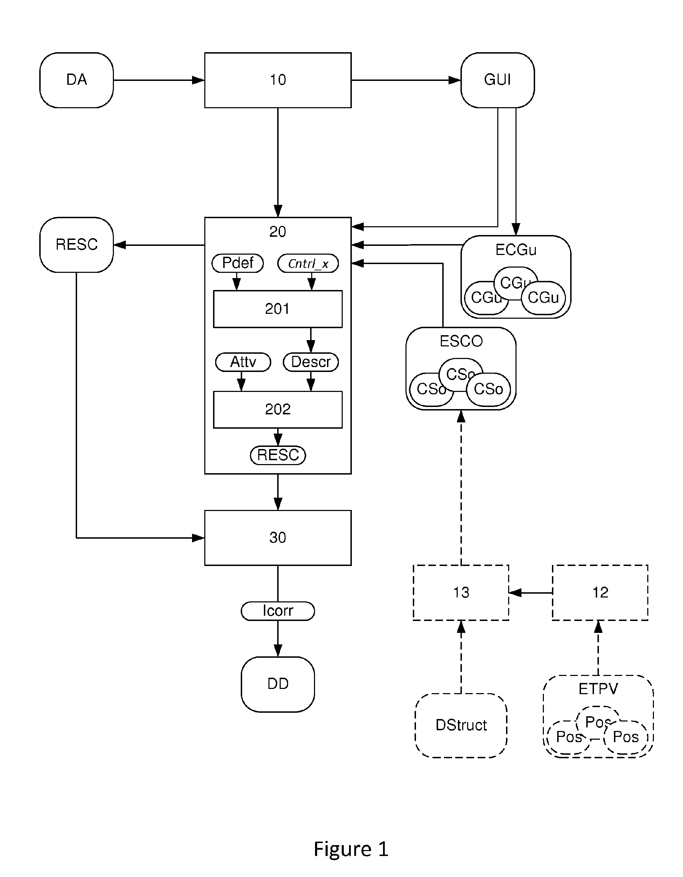

A general embodiment of the proposed technique is described in relation with figure 1. The process for guiding shooting of a picture is implemented by an apparatus comprising a display device (DD). The process can also run as a remote process and the display device can be used only for displaying the resulting picture. The process can be an online process accessible through a user device equipped with a display or being able to communicated with a display. For instance the process can be an online process accessed through a mobile phone, a PDA or a tablet. As already explained the method comprises at least one iteration of the following:
- obtaining (10) an image representative of a subject to be photographed, called a guidance image (GUI), via an acquisition device (DA);
- comparing (20) of a set (ECGu) of features of the guidance image, called a guidance feature (CGu), with a corresponding set (ECSO) of desired characteristic (CSO), delivering a comparison result (RESC);
and when the desired characteristic (CSO) differs from the guidance feature (CGu), displaying (30) on the display device (DD) an item of correction information (Icorr) of the guidance image in view of the comparison result (RESC).

More specifically, the proposed method comprises an iterative set of steps which are performed along with receiving a guidance image of the subject from a camera. The guidance image (or frame) is obtained by the camera and copied to the main control component for the comparison. The main control component implements a set of controls (using controllers). Each control of this set is based on some definition parameter (Pdef) for controlling a desired characteristic (CSo). A parameter (Pdef) can comprise functions parameters and expected values, thresholds, etc. In some case, when the controller associated with the parameter is very specific, the parameter can comprise only one expected value or range, without needing any function parameter.

Prior to the comparison (20), in a specific embodiment, the method comprises a obtaining (13) from a data structure (DStruc), the set (ECSO) of the desired characteristic (CSO). These characteristics are extracted from a data structure (DStruc) (for example à database) before the start-up of the process. They are distributed, as an input, to the controllers along with all or part of the guidance image. The controllers take the desired characteristic (which can comprise parameters) and control that the guidance image (or part of the guidance image) which comprise the guidance feature fulfils the desired characteristics. If not, information (Icorr) is displayed

Additionally, prior to obtaining (13) the set (ECSO) of the desired characteristic (OSC), the method can comprise a selection (12), among a plurality of profiles (ETPV), of a specific profile (POS), comprising the set (ECSO) of the desired characteristic (CSO). The selection of the specific profile among various possible profiles allows the user to set up the process according to a desired result. For example there can have a profile for identity pictures (compliant with ISO/IEC 1794-5 standard), a profile for an artistic portrait (which resembles to the ones of one or more known photographer), etc.

In a specific embodiment, the comparison (20) comprises, for a current desired characteristic (Csol) belonging to the set (ECSO) of desired characteristics:
- calculating (201), depending on at least one definition parameter (Pdef) of the current desired characteristic (Csol), of at least one descriptor (Descr) of the guidance image (GUI);
- comparing (202) of the at least one descriptor (Descr) with at least a corresponding expected value (AttV) associated with the at least one definition parameter (Pdef) of the current desired characteristic (Csol), outputting a comparison result (RESC) ;

In a specific embodiment, calculating (201) of a descriptor *(Descr)* implements at least one controller *(Cntrl_x)* taking as input the definition parameter(s) *(Pdef)* and all or part of said guidance image *(IGU).*

Since the process must be performed quickly (usually, the subject will not wait too much time in front of the camera, it is necessary to solve an additional problem which is linked to the speed of the control for ensuring a good result. For speeding up the process, some solutions may be explored such as using powerful processing means. However, such powerful processing means are not always available (for example when the process is implemented in a pocket camera, in a mobile device (tablet, PDA, mobile phone, smartphone..) or in a photo booth) and furthermore powerful processing means are expensive. The inventors have found that an interesting and cheap solution is to use controllers that fit with a specific task (i.e. not using multitask controllers), because the inventors have found that these specific controllers are faster. So the choice of the controllers is a first solution to the problem.

The ordering of the controls is a second solution to the problem. Indeed, for ensuring a good interactive level with the user, the inventors have found that it is preferable to order the control. Thus the desired characteristics (OSC) of the set of desired characteristics (ECSO) are ordered in the set of desired characteristics (ECSO) according to a pre-set ordering parameter. Indeed, this ordering can be done according to at least two separate ways: the first one consists in ordering the control for controlling the various aspects of the guidance picture from large characteristic controls to fine characteristic controls. The second one consists in ordering the control for using the controls which necessitate the fewest processing time first and using the one which necessitate the longest processing time last.

Additionally, the order which is used for processing the various features of the picture should reflect the ability of the subject of the picture to update its pose. Thus, in view of the constraints and/or requirements which are loaded from the database in order to check the frames, the call to the various controllers are ordered, not only in view of the necessary processing time for obtaining an invalidation or a validation of the checked feature, but also in view of the ability of the subject to update its pose or its behaviour. This ordering can be done from the easiest to the hardest gesture/pose/behaviour update which may generally be linked from the fastest to the longest processing time for the involved controller.

Thus, , the set comes with an order (i.e. the order in which the controls have to be made) and/or with associated controllers. In a specific embodiment, the controllers can also be loaded from the Database. This can be done for example in the case of a fully computer program implementation. In another embodiment, the controllers are specific chips which are interconnected on a printed circuit board and the main controller is in charge of selecting the most appropriate ones for fulfilling the set of controls.

In a specific embodiment, the set of characteristics comes with an order and associated controllers. Additionally, even if specific controllers are more suitable for specific controls, some controllers can be multitasks. This is for example the case of the face controller. A typical face controller is the face detector proposed in "Viola and Jones, 2001" which can generate a face bounding box according to the detected information of the image. This detector is suitable for detecting the face and is suitable for fragmenting the guidance picture in a set of regions which can be controlled afterwards by the other controllers.

In the following, a specific embodiment of the invention is proposed. In this embodiment, specific controllers are used in order to solve the interactive and real time problem. This embodiment, however does not limit the scope of the invention since other controllers can also be used for providing other guide for obtaining a desired picture.

### 5.2 Description of an embodiment

In this embodiment, the proposed technique is implemented for furnishing assistance for taking pictures in a photo booth. Indeed, ID pictures are particularly important for applications of administrative identification such as passports, driving licenses, national identity cards, etc. The picture must fulfil strict requirements regarding format and content. If the requirements are not fulfilled, the delivery of the required document may be delayed or even rejected by the administration. It is sometimes recommended to have a professional photographer so as to ensure the compliance with all the requirements of photos. However, photo booths are still widely used for taking identity photo for these kinds of applications.

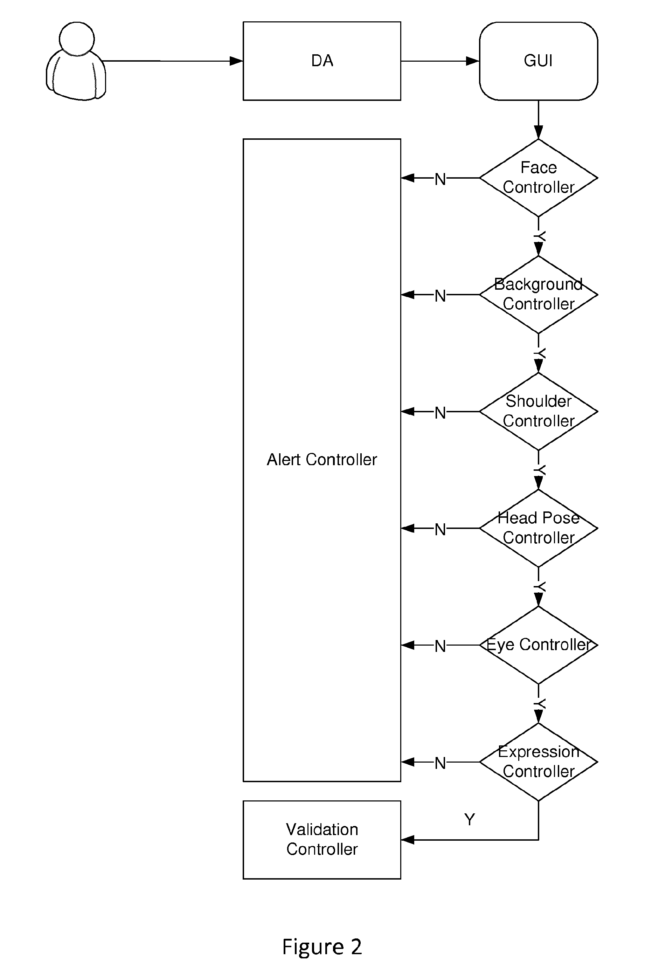

In this embodiment, a new photo booth comprising a camera, a monitor and an image analysing system is presented. This embodiment is presented in relation with figure 2. It can offer interactive control and guidance for taking photos compliant with identity photograph requirements and therefore overcome the inconveniences in prior art. This embodiment does not comprise the means for selecting a specific profile among a plurality of profiles. It is centred on the ID pictures requirements. The requirements followed by the image analysing system are the ones of the ISO/IEC 1794-5 standard. These requirements are saved in a database of parameters which are passed to a plurality of controllers, these controllers being in charge of analysing various characteristics of the pictures in view of the input parameters. The above requirements are not limitative. The owner or even the user of the photo booth can choose another set of requirements predefined in the photo booth so as to fulfil other requirements. It is also conceivable that a user can select different requirements available in the photo booth so as to get a photo with customized requirements, for example in order to take an artistic picture.

### 5.2.1 Photo Booth

The current embodiment is implemented in a photo booth. This photo booth comprises at least one camera, a monitor for display pictures and/or advice on the hanging of the user. The camera and monitor can be the same as that of a photo booth in prior art. Typically, the camera can capture in real time the scene view as video frames, which are displayed in real time on the monitor. Once he is in the photo booth in front of the camera, the user can see himself on the monitor. This allows the user to know what the photo will be like before seeing the final photo. The user can therefore adjust its hanging according to its preferences. In this embodiment, the captured frames are also transmitted to the image analysing system in real time for checking the compliance of the frames (which play the role of guidance images) with a given set of requirements (rules or characteristics).

### 5.2.2 Image analysing system

The image analysing system comprises a main control component (main controller) comprising a set of controllers, an alert component and a validation component. The controllers of the set of controllers are able to check the compliance of specific characteristics or features of the guidance images according to the requirements. If the checked characteristics or features of the successive guidance images are compliant with the corresponding requirement, the corresponding controller sends a positive output to the alert component; if not, a negative output along with a warning message is sent to the alert component.

In this embodiment, the control component comprises the following controllers corresponding to the requirements (A to K) mentioned in previous sections.
- Face controller which checks if the face is visible, not occluded and centred (requirements D,G,I,J,K);
- Background controller which checks if the background is uniform (requirement C);
- Shoulder controller which checks if the shoulders are facing the camera (requirement F);
- Head pose controller which checks if the head pose is frontal (requirement A);
- Expression controller which checks if the expression is neutral (requirement B);
- Eye controller which checks if the eyes are visible, open and looking straight at the camera (requirements E,H,I);

The detail features of each controller are described in the following sub-section. The number of controllers is not limited; a new controller can be added for checking new characteristics if needed. However, the order of the implementation of the controller can be important. As already explained, the controllers do not have the same processing time and do not need the same resources. The first optimization which has been made is to choose controllers which do not need important amount of processing time and resources for delivering the expected result. The second optimization which has been made is to order the processing of the controllers minimizing the consumption of processing time and resources. These two points have already been explained previously. In order to process with the various parts of the guidance image which are involved in the control of the characteristics, parameters are given to the controller (these parameters are used along with the guidance image in input of the controller).

### 5.2.3.1 Face controller

In this embodiment, the face controller is implemented on the base of the face detector proposed in "Viola and Jones, 2001" which can generate a face bounding box according to the detected information of the image. The face bounding box delimits the zone of the face. This detector is fast and reliable. This is why it has been chosen. If the face captured by the camera is largely occluded or if the head is not facing the camera, the face detector sends a negative output and a warning message (e.g. *"Face is not visible"*) to the alert component. The warning message is then displayed on the monitor by the alert component. The warning message could be displayed in red colour or other eye-catching style so as to draw the attention of the user.

If the face bounding box is not centred in the original image, the face control component sends a negative output and a warning message (e.g. *"Face is not centred, please move face rightwards*/*leftwards"*) to the alert component which displays the warning message on the monitor.

The dimensions of the face bounding box are also restrained by the following requirements:
- the bounding box should be at least 240 pixels wide;
- the ratio of image width to head width should be between 7:5 and 2:1;
- the height of the face bounding box should be between 70% and 80% of the height of the image.

These requirements are input to the face controller as definition parameters and resulting expected values. For example, the parameter is the detection of the bounding box and the expected value is at least 240 pixels wide. If the face bounding box is not wide enough, or the ratio of image width to head width is too large (or small), or the height of the face bounding box is too small (or too large), the face controller will return a negative output and a warning message (e.g. "Face is too distant (or close), please move forward (or backward)") to the alert component which will then display the warning message on the monitor.

Besides, face f box is used to divide the whole image into the following three independent areas that will be used by the other controllers:
- the face area;
- the background area;
- the body area;

### 5.2.3.2 Background controller

The background controller takes as input a background image which is obtained by the face controller. After the fast face controller has made the first evaluations about the face, the extracted background is passed to the background controller for a fast background check. The background controller is able to check the characteristics of the background. For example, the homogeneity of the background area can be tested using histogram analysis. For instance, the distribution of the grey levels over the background area is approximated by a Gaussian and the percentage of outliers is compared to a threshold. If the background is classified as non-uniform, then the background controller sends a negative output and a warning message (e.g. *"Background non-uniform, please make sure there is no one or nothing behind you*") to the alert component which displays it on the monitor.

For enhancing the interactivity, the pixels classified as outliers can also be transferred to the control component, to be highlighted on the visualization screen.

In a second embodiment, instead of analysing distribution of radiometry in background, it is also possible to detect gradient (Sobel gradient for example). A threshold is applied to this gradient. It is also possible to use a binary classification on background. The classification is learned previously and the background to analyse is given to the classifier for obtaining a binary result (OK, non OK).

### 5.2.3.3 Shoulder controller

The shoulder controller takes as input a background image which is obtained by the face controller. After the fast face controller has made the first evaluations about the face, the extracted body area is passed to the shoulder controller for a fast shoulder position check.

The shoulder controller is able to check the characteristics (e.g. symmetry) of the shoulder. The body area is tested against symmetry along the vertical axis passing through the centre of the face bounding box. For instance it is possible to compute the difference in intensity values between both sides of the vertical axis, then smooth the result and study the distribution. If the shoulders are symmetric, then the distribution should be centred on zero with a small number of outliers. The expected values, in this case, are thus the number of outliers (which should be under a given threshold) and the deviation of the distribution (which should be close to 0). If the symmetry is not validated, then the shoulder controller sends a negative output and a warning message (e.g. *"Shoulders not square please face the camera and put your hair behind shoulders"*) to the alert component which then displays the warning message on the monitor.

In a second embodiment which may be linked to the second embodiment of the background controller, considering that the background distribution is known, binarization of the (part of the) image by segmentation is done: in a given zone, which corresponds to the zone in which the shoulders should be present, the numbers of pixels of non-background are counted on the left and on the right of the vertical axis of the given zone. These numbers have to be equivalent on both side. This means that the shoulders are correctly positioned. On the contrary, the shoulders are not correctly positioned.

### 5.2.3.4 Head pose controller

The head pose controller is able to determine whether the head pose is frontal or not. Unlike other head pose estimators, which look for an estimation of head yaw, pitch and roll angles, the solution of this embodiment only requires a reliable binary classification procedure (frontal / non-frontal) in order to speed up the overall process.

To this end, the inventors choose a head pose classification based on Histograms of Localized Gradient Orientations (HLGOs) and SVM classification, using a ground truth pose annotations in a training database.

A training database provides both an annotation of the face location (face bounding box) and a label indicating whether the pose is frontal or non-frontal. The regression approach consists in finding a separating plane between the vector of features characterizing a frontal pose, and the vector of features characterizing a non-frontal pose

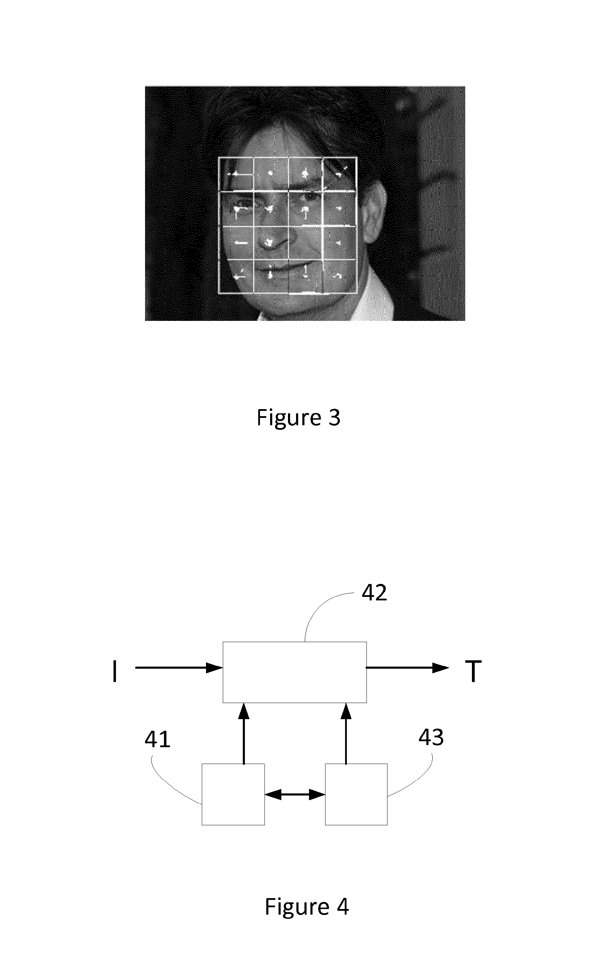

According to the article of *"*Murphy et al., 2007", "Histograms of Localized Gradient Orientations (HLGOs)*"* are chosen to capture the face appearance. An HLGO is constructed by splitting the face bounding box into a grid of rectangular blocks, and constructing a histogram of quantized orientations within each block, as illustrated on **Figure 3****.** The lengths of the arrows in each histogram are proportional to the accumulated gradient intensities for the considered orientation. The number of horizontal and vertical blocks in the grid is predetermined.

At each point (*x, y*) for which the gradient magnitude exceeds a prescribed threshold (set to 20 in this embodiment), the gradient orientation is computed, quantized into P bins (P=8 in this embodiment) and used to increment HLGO bins separately within each block of the grid. With 4x4 blocks per face image and 8 bins per HLGO, each face bounding box is described by a vector x*ᵢ* of 128 components, each component being normalized to [0.0,1.0]. The classification is performed using support vector machines.

If the head pose computed over the face bounding box is classified as non-frontal, then the head pose controller sends a negative output and a warning message to the alert component which will then display the warning message (e.g. *"Head not facing the camera, please turn head towards camera"*) on the monitor.

Another embodiment, for Head Pose Controller would be to quickly detect, in the image, the eyes, mouth and nose (same classification method than for the face). Once these elements are detected, calculations are made for obtaining the position of these elements relative to each other. In such an embodiment, the Head Pose Controller is employed after the Eyes Controller (See herinafter): the eyes and the correctness of their features are checked first, and then if they are correct, they are passed to the head pose controller.

Once eyes, mouth and nose are extracted from the image, estimation of the pose of the face can rapidly be done by using a generic face pattern. The duration for such a processing is approximately 2 ms.

Thus, once the pose is controlled, other calculation can be made for estimating the expression.

### 5.2.3.5 Expression controller

The expression controller is able to check if the expression is neutral. Unlike most of expression recognition approaches which aim at classifying expressions into 7 primary emotions (neutral, anger, happiness, sadness, fear, disgust, surprise), the solution of this embodiment only requires a binary classification as neutral and non-neutral.

To this end, it is appropriate to use a holistic analysis algorithm, which performs a classification on the whole face bounding box, according to the model based on Bartlett's work (Bartlett, et al., 2006). This algorithm is faster and reliable. More specifically, the pixel data is transformed into Gabor wavelets and undergoes a dimensionality reduction phase using an Adaboost algorithm:
- each normalized face texture from the database is transformed into several decompositions for local analysis such as Gabor decompositions, Local Binary Patterns (LBP), and LBP histograms that will serve as raw feature vectors;
- an Adaboost training process is performed to reveal the most relevant features and organize them to achieve the best performance in terms of quality and speed.

This arrangement allows obtaining a fast classification, delivering a binary result (neutral/not neutral). If the expression is classified as non-neutral, the expression controller sends a negative output and a warning message (e.g. *"Expression not neutral, please close mouth, do not smile, relax eyes and eyebrows"*) to the alert component which then displays the warning message on the monitor.

### 5.2.3.6 Eye controller

The eye controller is able to determine whether the eyes are visible, open, and/or looking at the camera. This can be achieved by using an iris detector along with an eye detector. It is preferable that the operation of Eye controller be performed after the Face controller and/Head controller. Indeed, it is useless to check the eyes if the face is not in an appropriate position or if the head is not frontal. This measure can make the operation of the controllers more efficient and furthermore avoid wasting processing time for useless calculations.

Following the conclusions of the article of *"*Everingham and Zisserman, 2006*",* an iris detector based on a likelihood ratio test is used in this embodiment. The gist of the method is to learn a full-covariance Gaussian model of the iris region from a labelled training database, as well as a "non-iris" model from regions of the training database images located close to, the iris, but not overlapping with it. Given a test image where a face has been detected, predefined search regions for the eye of the face bounding box are explored pixel by pixel. Around each pixel, the positive and negative learnt Gaussian models for the iris are computed in a region corresponding to the expected iris size (five different sizes corresponding to the expected scale variations of the iris to face width ratio are considered). The highest likelihood ratio yields the detected eye location.

When the iris has been detected, the eye outline can be easily extracted by using the region around the iris as an input; the iris position can be tested against the eye centre.

If the eyes are not visible (due to dark sunglasses, long fringe, etc.) or closed, the iris detection fails. If the person is not looking at the camera, the subsequent eye detector will detect that the pupil is not centred in the eye. In any one of these two cases, the eye controller sends a negative output and a warning message (e.g. "Iris is not clearly visible") to the alert component which will then display the warning message on the monitor.

Additionally, the eye position is tested against the image dimension: the distance between the bottom edge of the image and the horizontal eye line should be between 50% and 70% of the total vertical length;

If this distance is too short or too large, then the warning message *"Face is too low, please move your head up"* or *"face is too high, please move your head down"* is sent to the alert component.

There should be roughly 120 pixels between the two eyes; If this distance is too short or too large, the warning message *"Face is too distant, please move forward"* or *"Face is too close, please move back"* is sent to the alert component.

In another embodiment, a classifier may be used. The same global method based on the face detector proposed in "Viola and Jones, 2001" can also be used, but for detecting iris instead of the face. A learning process is implemented with "bad" iris (eyes closed, eyes not focused).

### 5.2.3.7 Alert component and Validation component

When one of the controllers returns a negative value, the specific warning message sent by the controller to the alert component is displayed on the monitor (for example in a red colour for ensuring its visibility). The user can chose to ignore the warning message or to follow the guidance displayed on the screen until the guidance image is valid. Additionally, some graphics elements can be displayed to further guide the user:
- If the face controller returns a negative value, then the optimal position of the face bounding box should be displayed,
- If the background controller returns a negative value, then the outlier pixels from the background should be highlighted,
- If the eye controller returns a negative value, then the optimal position of the eye line should be displayed.

If the user ignores all the warning messages, the validation component will validate the current image and prepare the final photo.

If all the controllers send a positive output, then a positive message (e.g *"the face image is compliant"*) is displayed on the monitor. The positive message can be in green color indicating that the photo is compliant with the requirements of identity photograph. The validation component can then automatically validate the current image as the final photo to be printed.

Importantly, all the processes previously described can be performed in real-time, and the user can be informed of the compliance of his photo at a rate close to the video frame rate (near real-time). In a general embodiment, for accelerating the detection of the various features of the face or the scene, a complete first detection can be done on a first frame extracted from the stream which comes from the camera. Then, tracking is done on successive other frames, but without needing to detect again every zone or feature of the image. For achieving this result, a template matching tracking is implemented (the similarity of successive frame or image is measured by using NSSD for *"normalized sum of square differences").*

For legibility reasons, it can be necessary to introduce resilience in the messages (it is possible to assume that the person does not move very quickly). However, as already explained hereinbefore, sampling of the frames is done in function of the processing availability of the device which is used. Thus, guiding the user for ensuring a kind of immobility can be a good strategy for speeding up the overall process.

In another general embodiment, which can be combined with other embodiments herein before presented, controllers can also be ordered in view of a given context associated with the characteristics. Indeed, some desired characteristics are not varying very fast: background, shoulder, head pose. These characteristics can be evaluated for example only once on ten or once on twenty (regarding the frames in the stream) because they are not supposed to change often. On the contrary, characteristics associated with eyes or expression may vary rapidly and should be checked on every frame of the stream until a compliant guidance image is obtained. Once this image is obtained, it can be processed for delivering the final image which will be shot and/or printed. Thus, in this embodiment, for a given frame (which is considered as a guidance image), some characteristics will be checked on every frame whereas some characteristics will be checked only once on ten or once on twenty. Of course, when one desired characteristic is not obtained on a guidance image (and that this characteristic is normally not checked in every image) then the characteristic is checked on every image until it becomes correct. Once correct, the checking rate becomes once on ten, once on twenty, etc.

### 5.3 Related devices

In at least one embodiment, the proposed technique may be implemented, for the phase of pre-analysis, by a device connected to or integrated in a camera.

Figure 4 illustrates an embodiment of a picture guidance device according to the proposed technique. Such a device may be an applications server implementing one or more web services and/or be a single device linked to a camera and/or a single material server in a communication network, which may interact with other communications network servers.

Such a device has a memory 41 consisting of a buffer memory, a processing unit 42, equipped for example with a microprocessor and driven by the computer program 43 implementing at least part of the rendering method according to the invention.

At initialization, the code instructions of the computer program 43 are for example loaded into a RAM and then executed by a processor of the processing unit 42. The processing unit 42 inputs at least one piece of information I, such as pictures (frames) and/or set (ECSO) of at least one desired characteristic (CSO). The microprocessor of the processing unit 42 implements part of the method described here above, according to the instructions of the computer program 43, to deliver a piece of processed information T, such as correction information. To this end, the device comprises, in addition to the buffer memory 41, means for obtaining the pictures (e.g. one or more interfaces), means for processing pictures (e.g. dedicated picture processor or mutualized picture processing components).

These means are for example driven by the microprocessor of the processing unit 42.

In another implementation, the device is a dedicated device, comprising dedicated microprocessors (or ASIC) and dedicating memory resources. In such a case, for example, the dedicated device may have several processor for analysis the picture content in view of the set (ECSO) of at least one desired characteristic (CSO) for detecting the characteristics in the picture and a processor for receiving and displaying the correction information. In another embodiment, the previous architecture may be mixed, associating software and hardware components.

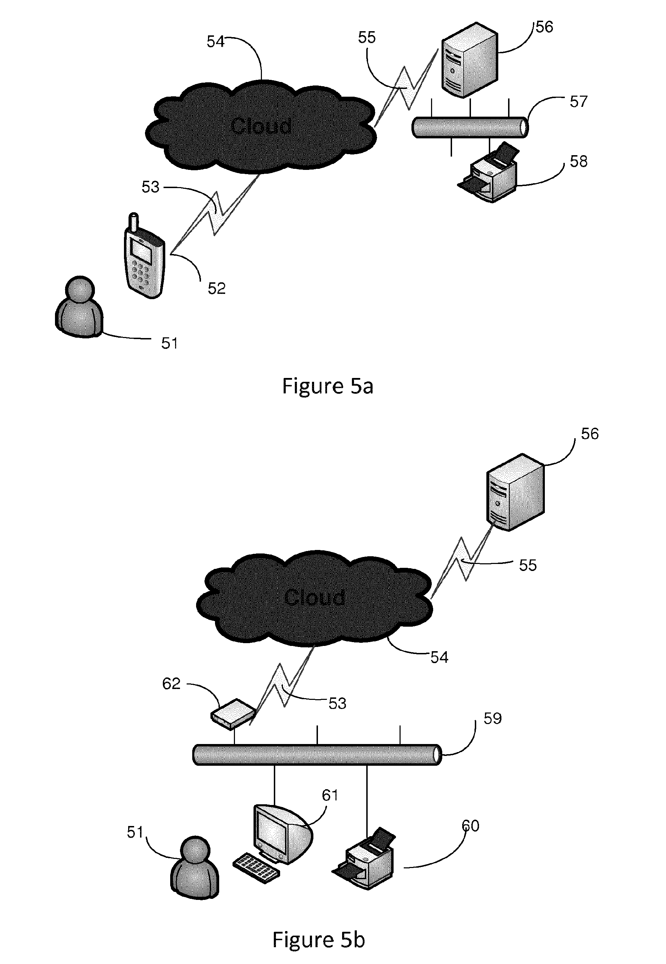

The invention can also be implemented as an online service as illustrated on figures 5a and 5b. A user having a personal device, for instance
- a personal computer 61 (laptop, desktop) equipped with a capturing device such as a camera, a webcam (not represented) or
- a mobile phone 52 such as a smartphone for instance, or a personal digital assistant,
- a tablet
can access though a web browser running on his device (61 or 52), to an online service on a web server (56) providing him with this guidance method described previously. The messages and user interface elements are then displayed on the user device 61 or 52 (or display associated with his device). Once the picture is in conformity with the desired characteristics, the user can either print it himself on printer 60 (maybe after being charged) or the user can ask for online printing (printer 58) and get the printed image later on.

The invention can also run as a software application directly on the user device (such as the ones described above) without the need for a web browser, and the user can obtain the picture in conformity with the desired characteristics at home, without using a photo booth. He can then print it himself, or ask to an online printing service or send it to a professional photographer.

So, the invention concerns a mobile device comprising a display or connected to an external display and a processor. The processor is adapted to execute computer program instructions for the execution of the method for guiding shooting as described previously.

The invention concerns also a mobile device comprising a display or associated with a display, a camera for capturing a picture, a network interface for communicating with an online service providing an online guidance method. In this embodiment,
- the camera captures an image representative of a subject to be photographed, called a guidance image (GUI);
- the captured image, called guidance image, is displayed on the display device;
- the online guidance method compares (20) a set (ECGu) of at least one feature of the guidance image, called a guidance feature (CGu), with a corresponding set (ECSO) of at least one desired characteristic (CSO), delivering a comparison result (RESC);
   and when the desired characteristic (CSO) differs from the guidance feature (CGu) displays (30) on the display device (DD) of at least one item of correction information (Icorr) of the guidance image in view of the comparison result (RESC),
   the camera capturing iteratively a new image of the subject until the comparison matches.

More precisely, on figure 5a , a mobile device 52 captures a picture of a user 61. Said mobile device 52 communicates with an online server 56 via networks 53 and 55 separated by internet network 54. The online server 56 comprises online software for performing the guidance method already described in details earlier. The online server can also communicate with a printer 58 where the obtained picture can be printed and sent to the user 51 or used by legal authorities directly for official papers.

On figure 5b, a camera (or webcam, not represented) connected to a computer 61 captures a picture of user 51. The computer 61 is connected to a gateway 62 via a network (local area network for instance) 59. Said gateway is connected to internet network through a link (53) of DSL type for instance. The online server 56 provides an online software for performing the guidance method already described in details earlier. When the image matches, the user 51 can print himself his photo on his personal preinter 60. The seur can also sends the picture though USB key or any other means for printing to a professional.

The invention can also find an application for legal authorities who require passport photos, identity photos...The picture obtained by such a guidance method or device can be transmitted directly to these authorities through internet. This can be an additional step to the method described here avoiding printing by the user and enabling a direct transmission to the authorities. Such a guidance method can also be provided as software or online method by local authorities so that these authorities and the users are totally sure that the picture is compliant with their requirements.

## Claims

1. A guidance method for taking a picture, implemented by an apparatus comprising a display device (DD), method being **characterized in that** it comprises at least one iteration of:
- obtaining (10) an image representative of a subject to be photographed, called a guidance image (GUI), via an acquisition device (DA);
- comparing (20) of a set (ECGu) of at least one feature of said guidance image, called a guidance feature (CGu), with a corresponding set (ECSO) of at least one desired characteristic (CSO), delivering a comparison result (RESC);
and when said desired characteristic (CSO) differs from said guidance feature (CGu) displaying (30) on said display device (DD) of at least one item of correction information (Icorr) of said guidance image in view of said comparison result (RESC).

2. The method according to claim 1, **characterized in that** it further comprises, prior to the comparison (20), obtaining (13) from a data structure (DStruc), said set (ECSO) of said at least one desired characteristic (CSO).

3. The method according to claim 2, **characterized in that** it further comprises, prior to obtaining (13) of said set (ECSO) of said at least one desired characteristic (OSC), selecting (12), among a plurality of profiles (ETPV), of a specific profile (POS), comprising said set (ECSO) of said at least one desired characteristic (CSO).

4. The method according to claim 1, **characterized in that** said comparing (20) comprises, for a current desired characteristic (Csol) belonging to said set (ECSO) of desired characteristics :
- calculating (201), depending on at least one definition parameter (Pdef) of said current desired characteristic (Csol), at least one descriptor (Descr) of said guidance image (GUI);
- comparing (202) of said at least one descriptor (Descr) with at least a corresponding expected value (AttV) associated with the at least one definition parameter (Pdef) of said current desired characteristic (Csol), outputting a comparison result (RESC) ;

5. The method according to claim 4, **characterized in that** said calculation (201) of a descriptor *(Descr)* implements at least one controller *(Cntrl_x)* taking as input said at least one definition parameter *(Pdef)* and at least a portion of said guidance image *(IGU).*

6. The method according to claim 1, **characterized in that** said desired characteristics (OSC) of said set of desired characteristics (ECSO) are ordered in said set of desired characteristics (ECSO) according to a preset ordering parameter.

7. The method according to claim 1, **characterized in that** said set (ECSO) of at least one desired characteristic (CSO) refers to the standard ISO/IEC 19794-5.

8. The method according to claim 1, **characterized in that** said set (ECSO) includes the following desired characteristics:
- characteristics relating to the face;
- characteristics relating to the background of the image;
- characteristics on shoulders;
- specifications relating to the position of the head;
- characteristics related to facial expression;
- characteristics related to eyes.

9. A guidance device for taking a picture, communicating with a display device (DD), the device being **characterized in that** it comprises :
- an acquisition device (DA) for obtaining (10) an image representative of a subject to be photographed, called a guidance image (GUI);
- a processor for comparing (20) of a set (ECGu) of at least one characteristic of said guidance image, called a guidance feature (CGu), with a corresponding set (ECSO) of at least one desired characteristic (CSO), delivering a comparison result (RESC);
and when said desired characteristic (CSO) differs from said guidance feature (CGu), said processor transmitting for displaying (30) on said display device (DD) of at least one item of correction information (Icorr) of said guidance image in view of said comparison result (RESC).

10. Computer program product downloadable from a communications network and/or stored in a computer-readable carrier and/or executable by a microprocessor, **characterized in that** it comprises program code instructions for the execution of the method for guiding shooting according to at least one of the claims 1 to 8, when it is executed on a computer.

11. A mobile device comprising a display or connected to an external display and a processor, **characterized in that** said processor is adapted to execute computer program instructions for the execution of the method for guiding shooting according to at least one of the claims 1 to 8.

12. A mobile device comprising a display or associated with a display, a camera for capturing a picture, a network interface for communicating with an online service providing an online guidance method **characterized in that**
- Said camera captures an image representative of a subject to be photographed, called a guidance image (GUI);
- Said captured image, called guidance image, is displayed on said display device;
- Said online guidance method comparing (20) a set (ECGu) of at least one feature of said guidance image, called a guidance feature (CGu), with a corresponding set (ECSO) of at least one desired characteristic (CSO), delivering a comparison result (RESC);
and when said desired characteristic (CSO) differs from said guidance feature (CGu) displaying (30) on said display device (DD) of at least one item of correction information (Icorr) of said guidance image in view of said comparison result (RESC), Said camera capturing iteratively a new image of said subject until said comparison matches.
